# EUROPEAN PATENT APPLICATION

(11) **EP 4 442 116 A1**
(43) Date of publication of application: **09.10.2024**
(21) Application number: 23740355.5
(22) Date of filing: 16.01.2023
(51) Int. Cl.: A01N 47/16, A01N 37/18, A01P 17/00

(54) **PEST REPELLENT FOR USE ON HUMAN BODY**

(30) Priority: 14.01.2022 JP 2022004289
(71) Applicant: FUMAKILLA LIMITED, Tokyo 101-8606 (JP)
(72) Inventor: TOSHIMITSU, Ryosuke, Hatsukaichi-shi, Hiroshima 739-0494 (JP); KANAI, Mami, Hatsukaichi-shi, Hiroshima 739-0494 (JP); EDAMATSU, Hiroaki, Hatsukaichi-shi, Hiroshima 739-0494 (JP)
(74) Representative: Germain Maureau
(86) International application number: PCT/JP2023/001023
(87) International publication number: WO 2023/136347

(57) **Abstract**

A pest repellent for use on human body contains: a repellent active ingredient; a nonionic surfactant of at least one kind or two kinds selected from the group consisting of glycerin fatty acid esters and polyoxyethylene fatty acid esters; a water-soluble polymer containing a carboxyl group; and water.

## Description

### TECHNICAL FIELD

The present disclosure relates to a pest repellent for use on human body, particularly a pest repellent for use on human body whose repellent active ingredient does not scatter in the air, so that the pest repellent can be applied uniformly, without unevenness, not only to the arms and legs, but also to the face and neck, causing less feeling of tight skin or irritation when used; the repellent active ingredient stays longer, and the pest repellent exhibits good stability over time.

### BACKGROUND ART

DEET is commonly used as an active ingredient (repellent active ingredient) of a repellent for pests such as mosquitos (pest repellent) for use on the skin. However, DEET is highly volatile and does not stay long when used on the skin, so the problem is that the duration of such a repellent as described above is short, and repellents with superior duration have been studied. For example, Patent Document 1 suggests a method of using DEET and hexyl laurate, and Patent Document 2 suggests a method of mixing an emulsifier composition and DEET.

Many of repellents which are used by being sprayed on the skin in the form of liquid, e.g., aerosols or mist, contain high concentrations of ethanol and/or polyhydric alcohol to enhance the solubility and dispersibility of the repellent active ingredient, and the stability of the formulation as well. For example, icaridin and DEET are difficult to dissolve in water, but are soluble in ethanol. Accordingly, mixing of ethanol enhances the stability of the formulation.

However, a repellent containing ethanol has a problem that when the repellent is applied to the skin, its repellent active ingredient is less likely to stay on the skin. Further, the ethanol may cause some users to feel irritation, or their skin may feel dry and tight.

A repellent containing a polyhydric alcohol needs to contain a high concentration of the polyhydric alcohol to have the stabilizing effect. Such a repellent gives a sticky feel or a slimy feel when applied to the skin, which makes some users feel less easy to use. Some users may also feel irritation, similarly to the repellent containing ethanol. Patent Document 3 suggests an ethanol-free repellent containing a minimum amount of polyhydric alcohol.

### CITATION LIST

### PATENT DOCUMENTS

Patent Document 1: Japanese Unexamined Patent Publication No. 2003-012414
Patent Document 2: Japanese Unexamined Patent Publication No. H11-1404
Patent Document 3: Japanese Unexamined Patent Publication No. 2019-26603

### SUMMARY OF THE INVENTION

### TECHNICAL PROBLEM

Many of known repellents are in the form of aerosols or mist; therefore, sometimes the consumers inhale the repellent active ingredient scattered in the air when they use the repellent, and feel irritation. In addition, a liquid may run when the repellent is used, which makes some users feel less easy to use, and there are some repellents with cautions as to usage of the product, not to use them for face (around eyes and mouth) or neck. Further, some users feel uncomfortable, such as tight skin peculiar to repellents, in using the repellent.

In addition, for uniform emulsification and dispersion of the repellent active ingredient, a higher alcohol and/or a polyhydric alcohol need to be added at high concentrations, which results in a sticky feel or a slimy feel when the repellent is used on the skin, and makes some users feel uncomfortable.

As described above, a formulation containing a high-concentration repellent active ingredient which is superior in the repellent effect and which can appeal the duration needs addition of a surfactant, a higher alcohol, and a polyhydric alcohol at high concentrations. This gives a sticky feel and a slimy feel when used, and the skin feels tight after application. It thus has been difficult to obtain a repellent which is comfortable to use and easy to use, and which contains a high concentration of a repellent ingredient.

It is therefore an object of the present disclosure to provide a pest repellent for use on human body which does not scatter in the air and can be applied uniformly, without unevenness, not only to the arms and legs, but also to the face and neck, causing a less sticky feel and slimy feel when applied, and a less tight skin feel after application; the repellent active ingredient of the repellent stays longer; and the pest repellent does not separate even if it is stored for a long term and moreover exhibits good stability.

### SOLUTION TO THE PROBLEM

The present invention has the following aspects.
(1) A pest repellent for use on human body can contain: a repellent active ingredient (a); a nonionic surfactant (b) of at least one kind or two or more kinds selected from the group consisting of glycerin fatty acid esters and polyoxyethylene fatty acid esters; a water-soluble polymer (c); and water.
(2) The repellent active ingredient (a) may be at least one kind selected from the group consisting of icaridin and DEET.
(3) An HLB of the nonionic surfactant (b) of one kind or two or more kinds selected from the group consisting of the glycerin fatty acid esters and the polyoxyethylene fatty acid esters may be 8 to 19 or 9 to 16, and a range of the concentration is 8 mass% to 24 mass% or 9 mass% to 20 mass%.
(4) A concentration of the water-soluble polymer ^{©} may be 0.01 mass% to 2 mass% or 0.01 mass% to 1 mass% relative to a total mass of the pest repellent for use on human body.
(5) A concentration ratio (R = b/a) of a concentration of the nonionic surfactant (b) of one kind or two or more kinds selected from the group consisting of the glycerin fatty acid esters and the polyoxyethylene fatty acid esters to a concentration of the repellent active ingredient (a) may be R = 0.5 to 2.0 or R = 0.6 to 1.6.
(6) Each of the glycerin fatty acid esters may be an ester of glycerin and a fatty acid; the number of carbon atoms of the fatty acid may be 12 or more; and an HLB of the glycerin fatty acid ester may be 8 or less.
(7) Each of the polyoxyethylene fatty acid esters may be an ester of polyethyleneglycol and a fatty acid; the number of carbon atoms of the fatty acid may be 12 or more; and an HLB of the POE fatty acid ester may be 9 or more.
(8) A range of a concentration of the repellent active ingredient (a) may be 5 mass% to 30 mass%, or 5 mass% to 25 mass%, or 5 mass% to 20 mass%. Other ingredients may also be contained.

### ADVANTAGES OF THE INVENTION

A pest repellent for use on human body according to the present disclosure does not scatter in the air when used, and can be applied uniformly, without unevenness, not only to the arms and legs, but also to the face and neck, causing a less sticky feel and slimy feel when applied, and a less tight skin feel after application; the repellent active ingredient of the pest repellent stays longer; and the pest repellent does not separate even if it is stored for a long term and moreover exhibits good stability.

### DESCRIPTION OF EMBODIMENT

Hereinafter, an embodiment of the present invention will be described in detail. The description of a preferred embodiment below is merely an example in nature, and is not intended to limit the scope, application, or use of the present invention.

The pest repellent for use on human body according to the present embodiment contains: a repellent active ingredient (a); a nonionic surfactant (b) of one kind or two or more kinds selected from the group consisting of glycerin fatty acid esters and polyoxyethylene fatty acid esters; a water-soluble polymer (c); and water. The water is, for example, purified water. The pest repellent for use on human body may contain other ingredients, as necessary. The pest repellent for use on human body can be marketed as a pest repellent product in a container or the like, for example. The container may be, for example, a spray container, an aerosol container, or other types of containers. In the case of an aerosol container, a propellant that forces the pest repellent for use on human body out of the container is also contained in the aerosol container.

### <Repellent Active Ingredient (a)>

The repellent active ingredient (a) is an ingredient having a repellent effect on pests. Pests are, for example, mosquitos.

The repellent active ingredient (a) is not particularly limited as long as it has a repellent effect on pests, and examples thereof include, but are not limited to: a pest repellent ingredient, such as icaridin, DEET (diethyltoluamide), 3-[N-n-butyl-N-acetyl]aminopropionic acid-ethyl ester (IR3535), p-menthane-3,8-diol, 2-ethyl-1,3-hexanediol, butyl 3,4-dihydro-2,2-dimethyl-4-oxo-2H-pyran-6-carboxylate, n-hexyl triethylene glycol monoether, methyl 6-n-pentyl-cyclohexene-1-carboxylate, dimethyl phthalate, eucalyptol, α-pinene, geraniol, citronellal, camphor, linalool, 6 rabic 6 l, carvone, dioctyl phthalate, dibutyl phthalate, naphthalene, cinnamon, camphor, lemongrass, clover, thymus vulgaris, geranium, bergamot, laurel, pine, ternstroemia gymnanthera, pennyroyal, eucalyptus, and azadirachta indica; and a pyrethroid-based insecticide compound, such as natural pyrethrin, pyrethrin, allethrin, phthalthrin, resmethrin, furamethrin, phenothrin, permethrin, cyphenothrin, prallethrin, etofenprox, empenthrin, and transfluthrin. Among these, one kind may be used alone, or any two or more kinds may be used in combination (mixed).

As the repellent active ingredient (a), a repellent active ingredient which is difficult to be dissolved in water and soluble in ethanol can be used in terms of usefulness. Examples of such a repellent active ingredient (a) include, but are not limited to: icaridin, DEET (diethyltoluamide), 3-[N-n-butyl-N-acetyl]aminopropionic acid-ethyl ester (IR3535), and p-menthane-3,8-diol. Among these, icaridin or DEET can be used in terms of a feel and the effect when they are applied to the skin.

### <Nonionic Surfactant (b)>

The nonionic surfactant (b) is made of one kind or two or more kinds selected from the group consisting of glycerin fatty acid esters and polyoxyethylene fatty acid esters. The nonionic surfactant (b) of one kind or two or more kinds emulsifies and disperses the repellent active ingredient (a) uniformly, and contributes to improving the stability of the pest repellent for use on human body.

The glycerin fatty acid ester used in the present embodiment is not particularly limited, but can be, for example, an ester of glycerin and a fatty acid, in which at least one hydroxyl group of glycerin is esterified with a fatty acid. Specific examples of the glycerin fatty acid ester include, but are not limited to, glyceryl laurate, glyceryl myristate, glyceryl palmitate, glyceryl stearate, glyceryl oleate, glyceryl behenate, and glyceryl caprate.

The number of carbon atoms of the fatty acid can be 12 or more, and may be 14 to 22. Furthermore, the HLB of the glycerin fatty acid ester can be 8 or less, and may be 2 to 7.

The polyoxyethylene fatty acid ester for use in the present embodiment is an ester of polyethylene glycol and a fatty acid, having the average repeating number of polyoxyethylene groups (the average number of moles of ethylene oxide added), and at least one hydroxyl group of the polyethylene glycol is esterified with the fatty acid. In the description below, "polyoxyethylene" will be also referred to as "POE."

Specific examples of the POE fatty acid ester for use in the present embodiment include, but are not limited to, polyethylene glycol laurate (120E.O.), polyethylene glycol myristate (150E.O.), polyethylene glycol palmitate (150E.O.), polyethylene glycol stearate (150E.O.), polyethylene glycol distearate (150E.O.), and polyethylene glycol distearate (250E.O.).

The number of carbon atoms of the fatty acid can be 12 or more, and may be 14 to 22. The number of POEs can be 10 to 250, and may be 100 to 200. Furthermore, the HLB of the POE fatty acid ester can be 9 or more, and may be 10 to 20.

The HLB of the nonionic surfactant (b) of one kind or two or more kinds selected from the group consisting of glycerin fatty acid esters and polyoxyethylene fatty acid esters for use in the present embodiment can be 8 to 19, or may be 9 to 16.

The HLB is the hydrophile-lipophile balance, meaning the relative strength of hydrophilicity and lipophilicity of the surfactant molecule, and is a quantitative expression of the hydrophile-lipophile balance. The HLB of the nonionic surfactant is obtained from the following formula (1), using organic and inorganic values of the molecular structural formula.

Furthermore, the mixed HLB of the nonionic surfactant of one kind or two or more kinds can be obtained from the following formula (2).

HLB value of nonionic surfactant = Σ inorganic value/Σ organic value × 10 (1) HLB value of nonionic surfactants of two or more kinds = HLB1·W1 + HLB2·W2 + . . . (2) where HLB1 and HLB2 represent the HLB values of the respective nonionic surfactants, and W1 and W2 represent the weight fractions of the respective nonionic surfactants (W1 + W2 = 1).

### <Water-Soluble Polymer ^{©}>

The water-soluble polymer ^{©} for use in the present embodiment acts on the adsorption layers of association complexes that are emulsified and dispersed, and contributes to stabilizing the association complexes due to the steric protection effect and the electrostatic repulsion force. The water-soluble polymer ^{©} contained in the pest repellent for use on human body makes it possible to stabilize the association complexes even when the concentration of the surfactant is low, allowing a reduction in change in the viscosity over time even if the pest repellent is stored for a long term, and allowing a reduction in the aggregation and coalescence of the association complexes. The separation can thus be prevented.

In the present specification and claims, the "water-soluble polymer" refers to a polymer that can be dissolved or dispersed in water and can thicken an aqueous solvent.

Specific examples of the water-soluble polymer ^{©} include, but are not limited to, natural water-soluble polymers including: plant-based polymers such as arabic gum, tamarind gum, tragacanth gum, galactan, guar gum, xanthan gum, carob gum, locust bean gum, karaya gum, carrageenan, pectin, agar, quince seeds, algae colloid, and starch; microbial polymers such as dextran, dextrin, succinoglycan, and pullulan; and animal-based polymers such as collagen, casein, albumin, and gelatin. Examples of the semi-synthetic water-soluble polymer include, but are not limited to: starch-based polymers such as carboxymethyl starch and methylhydroxypropyl starch; cellulose-based polymers such as methyl cellulose, nitrocellulose, ethyl cellulose, methylhydroxypropyl cellulose, hydroxyethyl cellulose, sodium cellulose sulfate, hydroxypropyl cellulose, sodium carboxymethyl cellulose (CMC), crystalline cellulose, and cellulose powder; and alginate-based polymers such as sodium alginate and propylene glycol alginate. Examples of the synthetic water-soluble polymer include, but are not limited to: vinyl polymers such as polyvinyl alcohol, polyvinyl methyl ether, polyvinylpyrrolidone, and carboxyvinyl polymer (carbomer); polyoxyethylene polymers such as polyethylene glycol (molecular weight: 1500, 4000, 6000, etc.); polyoxyethylene-polyoxypropylene copolymer-based polymers; acrylic polymers such as sodium polyacrylate and polyethyl acrylate; polyethyleneimine; and cationic polymers. Examples of the inorganic water-soluble polymer include, but are not limited to, bentonite, AlMg silicate, laponite, hectorite, and silicic anhydride. Among these, one kind may be used alone, or any two or more kinds may be used in combination.

Among the above mentioned water-soluble polymers ^{©}, the carboxyvinyl polymer is particularly preferred because it acts on the adsorption layers of the association complexes that are emulsified and dispersed, and has the steric protection effect and the thixotropic property to prevent the aggregation and coalescence of the association complexes. The carboxyvinyl polymer is an acrylic acid-alkyl methacrylate copolymer.

### <Other Ingredients>

The repellent for use on human body may contain ingredients different from the above mentioned ingredients (other ingredients). Other ingredients include, for example, a surfactant different from the surfactant of a glycerin fatty acid ester and a polyoxyethylene fatty acid ester. Other ingredients also include, but are not limited to, additives such as a moisturizer, a bactericidal and antiseptic agent, a thickener other than the water-soluble polymer, a dye, a pH adjuster, a fragrance, an ultraviolet absorber, an ultraviolet scattering agent, and an antioxidant. Among these, one kind may be used alone, or any two or more kinds may be used in combination.

Other surfactants are not particularly limited, and a known surfactant can be appropriately used. Specific examples include, but are not limited to, a polyoxyethylene sorbitan fatty acid ester, polyoxyethylene sorbitol tetraoleate, polyoxyethylene hydrogenated castor oil, and polyoxyethylene polyoxypropylene glycol. These surfactants are preferred because they are less likely to impair the stability of the pest repellent for use on human body. Among these surfactants, one kind may be used alone, or any two or more kinds may be used in combination.

### <Concentrations of Respective Ingredients>

The concentration of the repellent active ingredient (a) in the pest repellent for use on human body according to the present embodiment can be 5 mass% to 30 mass% relative to the total mass of the pest repellent for use on human body. The concentration of the repellent active ingredient (a) may be 5 mass% to 25 mass% or 5 mass% to 20 mass%. If the concentration of the repellent active ingredient (a) is higher than or equal to the above lower limit, the repellent effect on pests is easily produced when the pest repellent for use on human body is used on the skin. If the concentration is lower than or equal to the above upper limits, the pest repellent for use on human body provides more superior stability. In the present specification and claims, the expression "5 mass% to 30 mass%" as an example means "5 mass% or more and 30 mass% or less," including the numerical values on both sides of "to." The same holds true for the other expressions.

The concentration of the nonionic surfactant (b) can be 8 mass% to 24 mass% relative to the total mass of the pest repellent for use on human body. The concentration of the nonionic surfactant (b) may be 9 mass% to 20 mass%. If the concentration of the nonionic surfactant (b) is less than the above lower limits, the pest repellent for use on human body may become less stable. If the concentration of the nonionic surfactant (b) exceeds the above upper limits, the pest repellent for use on human body may become less comfortable to use.

The concentration of the water-soluble polymer ^{©} can be 0.01 mass% to 2 mass% relative to the total mass of the pest repellent for use on human body. The concentration of the water-soluble polymer ^{©} may be 0.01 mass% to 1 mass%. If the concentration of the water-soluble polymer ^{©} is within the above range, the association complexes are sufficiently stabilized even when the concentration of the nonionic surfactant (b) is low, making the pest repellent for use on human body have superior stability. The molecular association complexes may become unstable if the concentration of the water-soluble polymer (c) is either too high or too low.

The concentration ratio R of the concentration of the nonionic surfactant (b) to the concentration of the repellent active ingredient (a) can be determined by (b)/(a). The concentration ratio (R = b/a) can be 0.5 to 2.0. The concentration ratio (R = b/a) can also be 0.6 to 1.6. If the concentration of the nonionic surfactant (b) is less than the lower limits of the above ranges, the pest repellent for use on human body may become less stable. If the concentration of the nonionic surfactant (b) exceeds the upper limits of the above ranges, the pest repellent for use on human body may become less comfortable to use and cause irritation.

### <Method for Preparing Pest Repellent for Use on Human Body>

The method for preparing the pest repellent for use on human body according to the present embodiment is not particularly limited, and the pest repellent for use on human body can be prepared by the following method, for example.

The repellent active ingredient (a), the surfactant (nonionic surfactant (b) and other surfactants as necessary), oil, and any other ingredients are stirred in a hot bath at about 80°C. To this mixture, purified water and additives as necessary are added, and after uniform emulsification and dispersion, the mixture is cooled by stirring. After cooling, additives such as the water-soluble polymer (c), an antiseptic agent, and a fragrance are added, and the mixture is further cooled to around room temperature. Examples of the antiseptic agent include, but are not limited to, methylparaben and propylparaben. An antiseptic agent different from these antiseptic agents may also be used.

### <Effects and Advantages>

The pest repellent for use on human body according to the present disclosure does not scatter in the air, and can be applied uniformly, without unevenness, not only to the arms and legs, but also to the face and neck, causing a less sticky feel and slimy feel when used, and a less tight skin feel after application; and the pest repellent has good stability, and the repellent active ingredient of the repellent stays longer.

Specifically, the nonionic surfactant (b) whose HLB is in a specific range is used as a surfactant; therefore, even a repellent active ingredient difficult to dissolve in water, such as icaridin, can be emulsified and dispersed uniformly with a small amount of surfactant, making it possible to stabilize the pest repellent for use on human body.

Further, the water-soluble polymer ^{©} is used in combination of the nonionic surfactant (b), making it possible to maintain the stable dispersion state even with a reduced amount of the surfactant. The water-soluble polymer (c) acts on the adsorption layers of association complexes that are emulsified and dispersed, and contributes to stabilizing the association complexes due to the steric protection effect and the electrostatic repulsion force. The water-soluble polymer (c) has the effect of preventing the aggregation and coalescence of the association complexes. It is therefore considered that by using the water-soluble polymer (c) in combination, it is possible to prepare the pest repellent for use on human body superior in stability with a small amount of the surfactant.

The repellent active ingredient (a) having low volatility such as icaridin has a reduced repellent effect mainly due to run-off by sweat or the like or due to transdermal absorption; therefore, a reduction in the transdermal absorption makes the repellent active ingredient (a) stay longer. Thus, the present invention is effective for various repellent active ingredients, and is particularly useful when a repellent active ingredient having low volatility such as icaridin is used.

The form of the pest repellent for use on human body according to the present embodiment is not particularly limited. For example, the pest repellent for use on human body can be used in the form of milky lotion, cream, gel, spray, or the like. The pest repellent for use on human body can be stored in a container appropriate for the form.

The pest repellent for use on human body according to the present embodiment exerts a sufficient repellent effect on the pests when applied to the skin, for example. Examples of the pests to be repelled by the pest repellent for use on human body according to the present embodiment include, but are not limited to, mosquitoes, gnats, stable flies, house dust mites, bed bugs, ticks, chiggers, and fire ants. The repellent has repellent effect on other pests as well.

### [Examples]

The present invention will be described in more detail below with reference to Examples and Comparative Examples. The present invention is not limited to the Examples.

### <Production Method of Examples and Comparative Examples>

Tables 1 to 3 show kinds and contents (the numeral values indicate mass%) of repellent active ingredients (a), surfactants (nonionic surfactants (b) and other surfactants as necessary), higher alcohols, and polyhydric alcohols. These are stirred in a hot bath at about 80°C. To this mixture, heated purified water is added, which is stirred to be cooled to 50°C. Then, a water-soluble polymer and an antiseptic agent are put into the mixture, and a neutralizing agent such as sodium hydroxide is added. The mixture is stirred and cooled to room temperature. Examples of the higher alcohol include, but are not limited to, isostearyl alcohol and octyldodecanol. A higher alcohol different from these higher alcohols may also be used. Examples of the polyhydric alcohol include, but are not limited to, glycerin, 1,3-butylene glycol, and propylene glycol. A polyhydric alcohol different from these polyhydric alcohols may also be used.

The "Balance" of the purified water in Tables 1 to 3 indicates the amount of purified water that makes the total amount of the pest repellent for use on human body 100 mass%.

**[Table 1]**

| Content (mass%) | | | | | | | | | | | | | |
|---|---|---|---|---|---|---|---|---|---|---|---|---|---|
| | | Example | | | | | | | | | Comparative Example | | |
| | | 1 | 2 | 3 | 4 | 5 | 6 | 7 | 8 | 9 | 1 | 2 | 3 |
| Repellent Active Ingredient | Icaridin | 5 | 10 | 15 | 15 | 15 | | 20 | 25 | 30 | 40 | 50 | 50 |
| | DEET | | | | | | 15 | | | | | | |
| Nonionic Surfactant | Glycerin Fatty Acid Ester | 5 | 5 | 5 | 15 | | 7.5 | 5 | 10 | 12 | 10 | 15 | 12.5 |
| | POE Fatty Acid Ester | 5 | 5 | 5 | | 20 | 7.5 | 5 | 10 | 12 | 10 | 15 | 12.5 |
| Water-Soluble Polymer | Carboxyvinyl Polymer | 0.05 | 0.05 | 0.05 | 0.05 | 0.05 | 0.05 | 0.05 | | | | | |
| Antiseptic Agent | Methylparaben | 0.2 | 0.2 | 0.2 | 0.2 | 0.2 | 0.2 | 0.2 | 0.2 | 0.2 | 0.2 | 0.2 | 0.2 |
| | Propylparaben | 0.1 | 0.1 | 0.1 | 0.1 | 0.1 | 0.1 | 0.1 | 0.1 | 0.1 | 0.1 | 0.1 | 0.1 |
| Purified Water | | Balance | Balance | Balance | Balance | Balance | Balance | Balance | Balance | Balance | Balance | Balance | Balance |
| Mixed HLB of Surfactants | | 11.45 | 11.45 | 11.45 | 11.45 | 11.45 | 11.45 | 11.45 | 11.45 | 11.45 | 11.45 | 11.45 | 11.45 |
| Surfactant Concentration (%) | | 10.00 | 10.00 | 10.00 | 15.00 | 2000 | 15.00 | 10.00 | 20.00 | 2400 | 2000 | 30.00 | 25.00 |
| Concentration Ratio R = b/a | | 200 | 1.00 | 0.67 | 1.00 | 1.33 | 1.00 | 0.50 | 0.80 | 0.80 | 0.50 | 0.60 | 0.50 |
| Appearance (Immediately After) | | ○ | ○ | ○ | ○ | ○ | ○ | ○ | ○ | ○ | △ | ○ | △ |
| Stability Test | RT (after 1 month) | ○ | ○ | ○ | ○ | ○ | ○ | ○ | ○ | ○ | - | ○ | - |
| | -5°C (after 1 month) | ○ | ○ | ○ | ○ | ○ | ○ | ○ | ○ | ○ | - | ○ | - |
| | 50°C (after 20 days) | ○ | ○ | ○ | ○ | ○ | ○ | ○ | ○ | ○ | - | × | - |

**[Table 2]**

| Content (mass%) | | | | | | | | | | | | | |
|---|---|---|---|---|---|---|---|---|---|---|---|---|---|
| | | Example | | | | | | | Comparative Example | | | | |
| | | 10 | 11 | 12 | 13 | 14 | 15 | 16 | 4 | 5 | 6 | 7 | 8 |
| Repellent Active Ingredient | Icaridin | 15 | 15 | 15 | 15 | 15 | 15 | 15 | 15 | 15 | 10 | 15 | 20 |
| | DEET | | | | | | | | | | | | |
| Nonionic Surfactant | Glycerin Fatty Acid Ester | 5 | 5 | 5 | 5 | 5 | 5 | 2 | 5 | 5 | 2.5 | 2.5 | 2.5 |
| | POE Fatty Acid Ester | 3 | 4 | 7 | 10 | 12.86 | 18.81 | 10 | 0.95 | 1.41 | 2.5 | 2.5 | 2.5 |
| Water-Soluble Polymer | Carboxyvinyl Polymer | 0.1 | 0.05 | 0.05 | 0.05 | 0.05 | 0.05 | 0.05 | 0.05 | 0.05 | | 0.05 | |
| Antiseptic Agent | Methylparaben | 0.2 | 0.2 | 0.2 | 0.2 | 0.2 | 0.2 | 0.2 | 0.2 | 0.2 | 0.2 | 0.2 | 0.2 |
| | Propylparaben | 0.1 | 0.1 | 0.1 | 0.1 | 0.1 | 0.1 | 0.1 | 0.1 | 0.1 | 0.1 | 0.1 | 0.1 |
| Purified Water | | Balance | Balance | Balance | Balance | Balance | Balance | Balance | Balance | Balance | Balance | Balance | Balance |
| Mixed HLB of Surfactants | | 9.46 | 10.57 | 12.78 | 14.10 | 14.95 | 16.06 | 16.75 | 6.04 | 7.00 | 11.45 | 11.45 | 11.45 |
| Surfactant Concentration (%) | | 800 | 9.00 | 12.00 | 15.00 | 17.86 | 23.81 | 12.00 | 5.95 | 6.41 | 5.00 | 5.00 | 5.00 |
| Concentration Ratio R = b/a | | 0.53 | 0.60 | 0.80 | 1.00 | 1.19 | 1.59 | 0.80 | 0.40 | 0.43 | 0.50 | 0.33 | 0.25 |
| Appearance (Immediately After) | | ○ | ○ | ○ | ○ | ○ | ○ | ○ | ○ | ○ | × | ○ | × |
| Stability Test | RT (after 1 month) | ○ | ○ | ○ | ○ | ○ | ○ | ○ | ○ | ○ | × | ○ | × |
| | -5°C (after 1 month) | ○ | ○ | ○ | ○ | ○ | ○ | ○ | △ | △ | × | △ | × |
| | 50°C (after 20 days) | ○ | ○ | ○ | ○ | ○ | ○ | ○ | × | △ | × | × | × |

**[Table 3]**

| Content (mass%) | | | | | | | | | | | | | |
|---|---|---|---|---|---|---|---|---|---|---|---|---|---|
| | | Example | | | | | | | | | | | |
| | | 17 | 18 | 19 | 20 | 21 | 22 | 23 | 24 | 25 | 26 | 27 | 28 |
| Repellent Active Ingredient | Icaridin | 15 | 15 | 15 | 15 | 15 | 15 | 15 | 15 | 15 | 15 | 15 | 15 |
| Nonionic Surfactant | Glycerin Fatty Acid Ester | 7.5 | 7.5 | 7.5 | 7.5 | 7.5 | 7.5 | 2.5 | 5 | 5 | 5 | 5 | 5 |
| | POE Fatty Acid Ester | 7.5 | 7.5 | 7.5 | 7.5 | 7.5 | 7.5 | 2.5 | 5 | 5 | 5 | 5 | 5 |
| | POE Sorbitan Fatty Acid Ester | | | | | 2 | | | | | | | |
| | POE Sorbit Tetraoleate | | | | | | 2 | | | | | | |
| | POE Hydrogenated Castor Oil | | | | | | | 5 | | | | | |
| Water-Soluble Polymer | Carboxyvinyl Polymer | | | | | 0.05 | 0.05 | 0.05 | 0.05 | 0.05 | 0.05 | 0.05 | 0.05 |
| | CMC | 0.2 | | | | | | | | | | | |
| | HEC | | 0.2 | | | | | | | | | | |
| | Xanthan Gum | | | 0.04 | | | | | | | | | |
| | Cationized Guar Gum | | | | 0.04 | | | | | | | | |
| Higher Alcohol | Isostearyl Alcohol | | | | | | | | 5 | | | | |
| | Octyldodecanol | | | | | | | | | 5 | | | |
| Polyhydric Alcohol | Glycerin | | | | | | | | | | 5 | | |
| | 1,3-Butylene Glycol | | | | | | | | | | | 5 | |
| | Propylene Glycol | | | | | | | | | | | | 5 |
| Antiseptic Agent | Methylparaben | 0.2 | 0.2 | 0.2 | 0.2 | 0.2 | 0.2 | 0.2 | 0.2 | 0.2 | 0.2 | 0.2 | 0.2 |
| | Propylparaben | 0.1 | 0.1 | 0.1 | 0.1 | 0.1 | 0.1 | 0.1 | 0.1 | 0.1 | 0.1 | 0.1 | 0.1 |
| Purified Water | | Balance | Balance | Balance | Balance | Balance | Balance | Balance | Balance | Balance | Balance | Balance | Balance |
| Appearance (Immediately After) | | ○ | ○ | ○ | ○ | ○ | ○ | ○ | ○ | ○ | ○ | ○ | ○ |
| Stability Test | RT (after 1 month) | ○ | ○ | ○ | ○ | ○ | ○ | ○ | ○ | ○ | ○ | ○ | ○ |
| | -5°C (after 1 month) | ○ | ○ | ○ | ○ | ○ | ○ | ○ | ○ | ○ | ○ | ○ | ○ |
| | 50°C (after 20 days) | ○ | ○ | ○ | ○ | ○ | ○ | ○ | ○ | ○ | ○ | ○ | ○ |

### <Stability Test Evaluation>

The pest repellents for use on human body (Examples 1 to 28 and Comparative Examples 1 to 8) produced by the above-mentioned production method were stored at room temperature (RT), -5°C, and 50°C for one month. The state (appearance) of each of the pest repellents for use on human body after the storage was visually evaluated, and the stability was evaluated according to the following criteria. The results are as shown in Tables 1 to 3. In Examples 1 to 28, uniform emulsification and dispersion without separation were found in a wide temperature range, whereas in Comparative Examples 1 to 8, oil droplets in the liquid and two-phase separation were found.

### (Evaluation Criteria)

○: Uniformly emulsified and dispersed without separation
△: Partially emulsified and dispersed with oil droplets
×: Separated into two phases

### <Evaluation of Scattering>

The pest repellent for use on human body was uniformly applied to the inner forearms of five subjects, and scattering was evaluated according to the following criteria, based on the results of evaluation by the subjects. The results are as shown in Table 4. No scattering was found for Example 3, whereas scattering was found for the marketed products A and B. The marketed product A is an aerosol product. The marketed product B is a pump mist product. The marketed product C is a gel product.

### (Evaluation Criteria)

○: All of the five subjects did not feel scattering.
×: At least one subject felt scattering.

**[Table 4]**

| | Example 3 | Marketed Product A | Marketed Product B | Marketed Product C |
|---|---|---|---|---|
| | Milky Lotion | Aerosol | Pump Mist | Gel |
| Face and Neck | ○ | × | × | ○ |
| Arm and Leg | ○ | ○ | ○ | ○ |
| Scattering | ○ | × | × | ○ |
| Ease of Uniform Application | ○ | × | ○ | ○ |
| Skin Irritation | ○ | × | × | × |
| Tight Skin | ○ | × | × | × |
| Blood-Sucking Inhibition Duration Effect | ○ | × | × | × |

### <Evaluation of Ease of Uniform Application>

The pest repellent for use on human body was applied to the inner forearms of five subjects, and the ease of the uniform application was evaluated according to the following criteria, based on the results of evaluation by the subjects. The results are as shown in Table 4. Example 3 was easy to apply uniformly.

### (Evaluation Criteria)

○: All of the five subjects found that uniform application was easy.
×: At least one subject found that uniform application was difficult.

### <Evaluation of Skin Irritation>

The pest repellent for use on human body was uniformly applied to the inner forearms of five subjects, and irritation was evaluated according to the following criteria, based on the results of evaluation by the subjects. The results are as shown in Table 4. No skin irritation was found for Example 3, whereas skin irritation was found for the marketed products A to C.

### (Evaluation Criteria)

○: All of the five subjects did not feel irritation.
×: At least one subject felt irritation.

### <Evaluation of Skin Tightness>

The pest repellent for use on human body was uniformly applied to the inner forearms of five subjects, and skin tightness after application was evaluated according to the following criteria, based on the results of evaluation by the subjects. The results are as shown in Table 4. No skin tightness was found for Example 3, whereas skin tightness was found for the marketed products A to C.

### (Evaluation Criteria)

○: All of the five subjects did not feel tightness on skin.
×: At least one subject felt tightness on skin.

### <Blood-Sucking Inhibition Duration Effect Test (Pest Repellent Test)>

The pest repellent for use on human body was uniformly applied to the inner forearms of five subjects. A syringe containing 10 female Asian tiger mosquitos was pressed against the skin for 1 minute after a lapse of each time (after a lapse of 10 hours, after a lapse of 5 hours, and before a lapse of 5 hours), and the number of spots where blood was sucked was counted to measure and evaluate the repellent effect. The results are as shown in Table 4. In Example 3, the blood-sucking inhibition rate was found 90% even when 10 hours had elapsed since the application, whereas in the marketed products A to C, the blood-sucking inhibition rate was below 90% when 5 hours had elapsed since the application.

### (Evaluation Criteria)

○: The blood-sucking inhibition effect was found 90% after 10 hours.
△: The blood-sucking inhibition effect was found 90% after 5 hours.
×: The blood-sucking inhibition effect was found 90% at less than 5 hours.

As shown in Table 1, regarding the pest repellents for use on human body of Examples 1 to 9, the repellent active ingredients could be emulsified and dispersed uniformly when the concentration of the oil-based repellent active ingredients, such as icaridin, was in a range of 5 mass% to 30 mass%; and the stability test results after one month were also good. Furthermore, the repellent active ingredients were emulsified and dispersed uniformly, and the stability test results after one month were also good, if the concentration ratio (R = b/a) of the nonionic surfactant (b) to the repellent active ingredient (a) was in a range of 0.5 to 2.0.

On the other hand, even if the concentration ratio R is in the range of 0.5 to 2.0 (R = 0.5 to 2.0), the appearance was not uniform immediately after the production, and the stability test results after one month were also not good, if the concentration of the repellent active ingredients was 40 mass% or more and the water-soluble polymer ^{©} was not added as in Comparative Examples 1 to 3.

Regarding the pest repellents for use on human body of Examples 4 and 5, the nonionic surfactant (b) was a glycerin fatty acid ester alone, and a polyoxyethylene fatty acid ester alone, respectively. The repellent active ingredient could be emulsified and dispersed uniformly, and the stability test results after one month were also good.

Regarding the pest repellent for use on human body of Example 6, DEET was mixed as the repellent active ingredient. Similarly to icaridin, DEET was emulsified and dispersed uniformly, and the stability test result after one month was also good.

As shown in Table 2, in Examples 10 to 16 in which the mixed HLB of the nonionic surfactants (b) was within a range of 9 to 16, the repellent active ingredient was uniformly emulsified and dispersed, and the stability test results after one month were also good. However, in Comparative Examples 4 and 5 in which the mixed HLB value was 8 or less, the appearance immediately after the mixture showed uniform emulsification and dispersion, but the stability after one month was not good.

Further, even if the mixed HLB value is in the range of 9 to 16, the stability test results after one month were not good if the concentration ratio (R = b/a) of the nonionic surfactant (b) to the repellent active ingredient (a) was 0.5 or less as in Comparative Examples 6 to 8.

These results show that the repellent active ingredients can be emulsified and dispersed uniformly and that the stability test results after one month are also good if the mixed HLB value of the nonionic surfactants (b) is in the range of 8 to 19 or 9 to 16 and if the concentration ratio (R = b/a) of the nonionic surfactant (b) to the repellent active ingredient (a) is 0.5 to 2.0 or R = 0.6 to 1.6.

As shown in Table 3, the pest repellents for use on human body of Examples 17 to 20 contain hydroxymethyl cellulose (CMC), hydroxyethyl cellulose (HEC), xanthan gum, and cationized guar gum as the water-soluble polymers. All of these substances could produce a uniform emulsion, and the stability test results after one month were also good.

The pest repellents for use on human body of Examples 21 to 23 contain a POE sorbitan fatty acid ester, POE sorbit tetraoleate, POE hydrogenated castor oil, etc., added thereto as other surfactants. All of these substances could produce a uniform emulsion, and the stability test results after one month were also good.

The pest repellents for use on human body of Examples 24 to 28 contain a higher alcohol and a polyhydric alcohol added thereto as additives. Both of these substances could produce a uniform emulsion, and the stability test results after one month were also good.

As shown in Table 4, as compared to the marketed product A and the marketed product B, the pest repellent for use on human body of Example 3 caused less scattering of the repellent active ingredient, caused less irritation when used, and was more easily applied not only to the arms and legs, but also to the face and around the neck, uniformly.

As compared to the marketed product C, the pest repellent for use on human body of Example 3 showed less running of the liquid when applied, was more easily applied to the whole body including the face and neck uniformly, and caused a less sticky feel and slimy feel, and no tight skin after the application.

Regarding the blood-sucking inhibition duration effect, as well, the blood-sucking inhibition duration effect of all the marketed products A, B, and C was no longer 90% in less than 5 hours, whereas the pest repellent for use on human body of Example 3 still had the blood-sucking inhibition effect of 90% even after 10 hours.

These results show that as compared to the marketed products A to C, the pest repellent for use on human body of Example 3 is more easily applied to the whole body including the face and neck uniformly, causes a less sticky feel and slimy feel, and no tight skin after the application, and moreover shows longer duration in the blood-sucking inhibition effect tests. The pest repellents for use on human body of the other Examples, as well, are more easily applied to the whole body including the face and neck uniformly, cause a less sticky feel and slimy feel, and no tight skin after the application, and moreover show longer duration in the blood-sucking inhibition effect tests, as compared to the marketed products A to C.

The above-described embodiment is merely illustrative in all respects and should not be interpreted in a limited manner. Further, all modifications and changes which come within the meaning and scope of equivalency of the claims are intended to be embraced in the scope of the present invention.

### INDUSTRIAL APPLICABILITY

As described above, the pest repellent for use on human body according to the present invention can be used, for example, to repel pests, such as mosquitoes, gnats, stable flies, tropical rat mites, bed bugs, ticks, chiggers, and fire ants, and can be employed, for example, as an insect repellent for application to human skin and an insect repellent for application to outer skin of a pet or livestock.

## Claims

1. A pest repellent for use on human body, the pest repellent comprising:
a repellent active ingredient (a);
a nonionic surfactant (b) of at least one kind or two or more kinds selected from the group consisting of glycerin fatty acid esters and polyoxyethylene fatty acid esters;
a water-soluble polymer (c); and
water.

2. The pest repellent for use on human body of claim 1, wherein
the repellent active ingredient (a) is at least one kind selected from the group consisting of icaridin and DEET.

3. The pest repellent for use on human body of claim 1, wherein
an HLB of the nonionic surfactant (b) of one kind or two or more kinds selected from the group consisting of the glycerin fatty acid esters and the polyoxyethylene fatty acid esters is 8 to 19, and a range of a concentration of the nonionic surfactant (b) is 8 mass% to 24 mass%.

4. The pest repellent for use on human body of claim 1, wherein
a concentration of the water-soluble polymer (c) is 0.01 mass% to 2 mass% relative to a total mass of the pest repellent for use on human body.

5. The pest repellent for use on human body of claim 1, wherein
a concentration ratio (R = b/a) between a concentration of the nonionic surfactant (b) of one kind or two or more kinds selected from the group consisting of the glycerin fatty acid esters and the polyoxyethylene fatty acid esters and a concentration of the repellent active ingredient (a) is R = 0.5 to 2.0.

6. The pest repellent for use on human body of claim 1, wherein
each of the glycerin fatty acid esters is an ester of glycerin and a fatty acid, the number of carbon atoms of the fatty acid is 12 or more, and an HLB of the glycerin fatty acid ester is 8 or less.

7. The pest repellent for use on human body of claim 1, wherein
each of the polyoxyethylene fatty acid esters is an ester of polyethyleneglycol and a fatty acid, the number of carbon atoms of the fatty acid is 12 or more, and an HLB of the polyoxyethylene fatty acid ester is 9 or more.

8. The pest repellent for use on human body of claim 1, wherein
a range of a concentration of the repellent active ingredient (a) is 5 mass% to 30 mass%.
